# EUROPEAN PATENT APPLICATION

(11) **EP 3 333 694 A1**
(43) Date of publication of application: **13.06.2018**
(21) Application number: 16202804.7
(22) Date of filing: 08.12.2016
(51) Int. Cl.: G06F 3/12

(54) **PRINTING SYSTEM WITH POWER-SAVE MODE**

(71) Applicant: OCE Holding B.V., 5914 CA Venlo (NL)
(72) Inventor: NISTOR, Mircea, 5914 CA Venlo (NL); VARGA, Andrei N., 5914 CA Venlo (NL)
(74) Representative: OCE IP Department

(57) **Abstract**

A printing system comprising at least one printer (10) having a power-save mode setting unit (24). The printing system comprises a decision unit (30) configured to:
- check a first condition relating to information that is available in at least one printing application (26) implemented on a data processing system (12) that is connected to said at least one printer (10), said first condition indicating a probability that a printing application (26) comprised in the at least one printing application (26) will require, within a first time (t1) from the present, a printer comprised in the at least one printers (10) in a ready state for executing a print job (28),
- check a second condition relating to information that is available in said at least one printer (10), said second condition indicating that a printer comprised in the at least one printers (10) is in the ready state but will enter into a power-save mode within a second time (t2) from the present, and
- if both conditions are fulfilled, prevent the printer from going into the power-save mode before the lapse of the first time (t1).

## Description

The invention relates to a printing system comprising at least one printer having a power-save mode setting unit.

Most commonly used printers are programmed to automatically enter into a power-save mode when they have not been used for a certain time. This applies in particular to printers which have a heating system for heating a fuse station or the like or for heating ink in case of a hot-melt ink jet printer. In the power-save mode, the heating system is switched off in order to prevent power from being wasted by unnecessarily keeping the heated components at an elevated temperature. However, once a printer has entered into the power-save mode and the printer shall then be used again, it may take a considerable time, depending upon the type of printer, until the printer has re-gained its operating temperature. This reduces the availability of the printer.

In view of these considerations, the time for entering into the power-save mode, as determined by the power-save mode setting unit, has been suitably adapted to the average frequency of use of the printer.

US 9 152 359 B2 discloses a printing system of the type indicated above, wherein the power-save mode setting unit controls the timing of an entry into the power-save mode dependent upon a print job history of the printer.

It is an object of the invention to provide a printing system with improved availability and reduced wear.

In order to achieve this object, a printing system according to the invention comprises a decision unit configured to:
- check a first condition relating to information that is available in at least one printing application implemented on a data processing system that is connected to said at least one printer, said first condition indicting a probability that a printing application comprised in the at least one printing application will require, within a first time from the present, a printer comprised in the at least one printers in a ready state for executing a print job,
- check a second condition relating to information that is available in said at least one printer, said second condition indicating that a printer comprised in the at least one printers is in the ready state but will enter into a power-save mode within a second time from the present, and
- if both conditions are fulfilled, prevent the printer from going into the power-save mode before the lapse of the first time.

By checking the first condition, the decision unit attempts to predict, based on an analysis of information that is available in the at least one printing application, whether or not a printer comprised in the at least one printers will be needed for printing in near future. In addition, the decision unit will check whether there is a printer comprised in the at least one printers that is presently in the ready state but must be expected to have entered into the power-save mode by the time when it will needed for the print job. Then, if both conditions are fulfilled, this printer is prevented from entering into the power-save mode, so that the printer will be ready for executing the print job without delay and without performing an unnecessary power-down and power-up cycle.

In the simplest case, the printing system comprises only one printer and only one data processing system, e.g. a host computer on which a single printing application is implemented.

In a more complex scenario, the printing system may include one printer. The printer is connected to a plurality of host computers not forming a part of the printing system and with printing applications implemented thereon. In that case, the check of the first condition will be executed separately for each printing application, and the first condition will be considered to be fulfilled if it is fulfilled for at least one of the printing applications.

In a more general printing system comprising a plurality of printers, the check of the second condition will be performed for all printers in the system and will involve a compatibility check between the capabilities of the printer and the job specifications of the print job or jobs that have been identified in the check of the first condition.

The requirement, in the check of the first condition, that the printing application will require a printer ready for executing the print job "within a first time from the present" does not mean that a certain point of time must be specified explicitly. It is only required that there is certain probability that a printer will be needed for printing within a certain time period which is so short that it would make sense to keep a printer ready during that time.

The assessment of a probability that a printer will be needed for printing is based among others upon an activity of a user of the printing application. For example, in a case where the compatibility check is trivial, the first condition may be considered to be fulfilled as soon as a printer driver has been called up. As an alternative, the first condition may be considered to be fulfilled when a certain progress has been made in the process of compiling a print job. On the other hand, there may be embodiments in which the first condition is considered to be fulfilled already when there is a certain probability that the printer driver will be called up. For example, when the host computer and the printing application are used by a secretary whose typical activity is to type business letters with not more than a few pages, then, as soon as a text processing application is opened with a template for a business letter, there is a high probability that the letter will have been typed and will then have to be printed within a few minutes. Thus, a "printing application" in the meaning of this disclosure may be any software application that includes a print command.

More specific optional features of the invention are indicated in the dependent claims.

In one embodiment, the decision unit may be installed in the data processing system that hosts the printing application. In another embodiment, it may be installed in the printer. In yet another embodiment, the decision unit may be a separate unit that communicates with the printing application or applications and with the printer or printers over a network.

In a system with a plurality of printers, there may be two or more printers that have the required capabilities for executing the print job and are in the ready state, so that any of these printers could be used for printing. In that case, the decision unit may select one of these printers for printing, using as a criterion that the job will be assigned to the printer that would be the last to enter into the power-save mode, for example. This maximizes the overall time in which the printers are in the power-save mode but nevertheless assures that a printer will be available for the job without delay.

Embodiment examples will now be described in conjunction with the drawings, wherein:
- Fig. 1: is a block diagram of a printing system according to the invention;
- Fig. 2: is a flow diagram illustrating a method of controlling power-save mode settings in the system shown in Fig. 1;
- Figs. 3 and 4: are diagrams analogous to Figs. 1 and 2, illustrating a second embodiment of the invention; and
- Figs. 5 and 6: are diagrams illustrating a third embodiment.

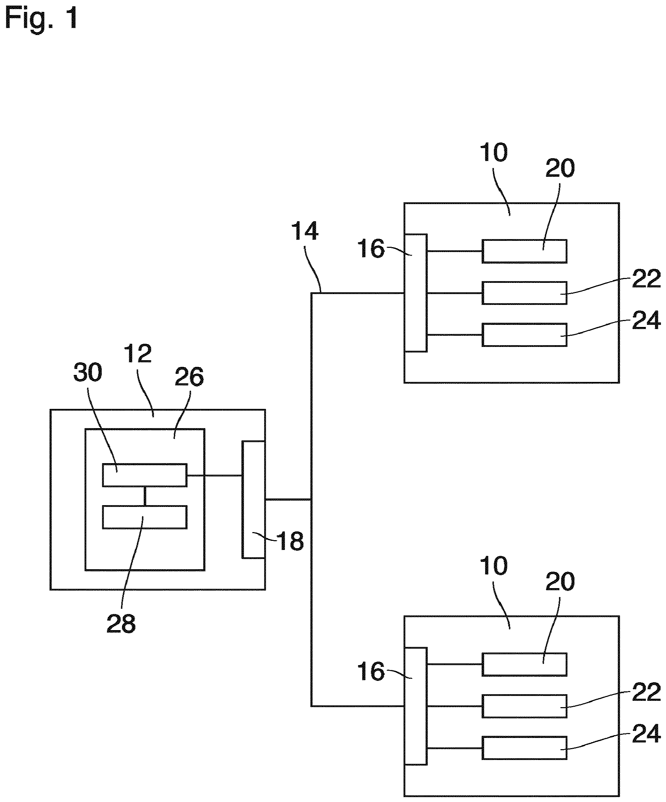

As is shown in Fig. 1, a printing system comprises two printers 10 and a data processing system (host computer) 12 connected to a common network 14 via respective interfaces 16, 18.

Each printer 10 has certain capabilities 20, such as a capability to print in color or black and white, printing different formats, processing different media types, and the like. Information on these capabilities is stored in digital form in a controller of the printer and is accessible via the network 14. Further, each printer has a status detector 22 and a power-save mode setting unit 24. In a simplified example, it may be assumed that the printer, if it is not switched off totally, may be in one of three different states "busy", "ready" and "power-save mode". In the state "busy" the printer is busy with executing a print job. In the state "ready" the printer is not busy but is ready to start executing a new print job as soon as the job is submitted. In the power-save mode, the printer controller is still powered and capable of communicating via the network 14, but certain consumers within the printer, e.g. heaters, have been switched off in order to reduce the power consumption of the printer. When a new print job is submitted while the printer is in the power-save mode, it will take a certain time until the consumers have been powered-up again and the printer can start processing the print job. The status detector 22 detects the current state of the printer 10 and communicates it to the outside world via the network 14. The power-save mode setting unit 24 is active when the printer is in the "ready" state and determines a timing at which the printer will be switched into the power-save mode. Typically the power-save mode setting unit 24 will be programmed to start a timer when the status of the printer changes from "busy" to "ready", and will then switch the printer into the power-save mode when a certain pre-set time has elapsed in the timer.

In the data processing system 12, a printing application 26 has been installed. When activated, this printing application 26 may be used for preparing a print job 28 to be submitted to one of the printers 10.

In this example, a decision unit 30 is integrated in the printing application 26. The decision unit 30 is a software module which monitors all other activities of the printing application. It will be understood that the printing application 26 receives commands from a user, including commands relating to the preparation of the print job 28. By monitoring these activities, the decision unit 30 detects a condition where there is a high probability that the print job 28 will be ready for printing and will be submitted to one of the printers 10 in the near future. The term "near future" is quantified by a first time t1 which is defined on the basis of the following consideration: Assume that a human user knows that it will still take a certain time x until the print job 26 is ready to be submitted to a printer, and the user also knows that the printer which he wants to use for printing is scheduled (by the power-save mode setting unit 24) to go into the power-save mode after a second time t2 which is shorter than x. Assume further that the user has the possibility to manually inhibit the power-save mode. Then, if the time x is only a few seconds longer than the second time t2, the user would decide to keep the printer in the ready mode so that the job can be printed without delay. On the other hand, if the time x would be as long as 24 hours so that the job would be ready for printing only the next day, then the user would of course decide to let the printer go into the power-save mode and then to re-power it the next day. Now, the first time t1 is defined such that a reasonable user would keep the printer in the ready mode if x is smaller than the first time t1 and would allow the printer to go into the power-save mode if x is larger than the first time t1. The decision unit 30 is programmed to emulate this behavior of a reasonable user.

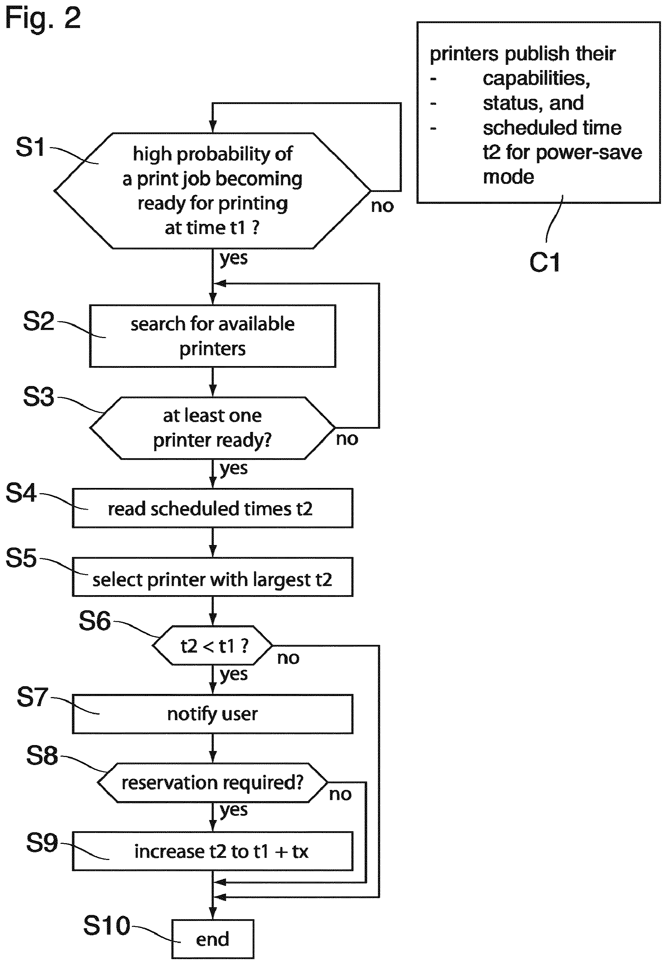

An example of a decision progress to be performed by the decision unit 30 has been shown in Fig. 2

As a start condition C1, it is assumed that each of the printers 10 in the printing system has "published" i.e. made available via the network 14, its capabilities 20, its status 22 and the second time t2, i.e. the scheduled time for entry into the power-save mode, as determined by the power-save mode setting unit 24.

In a first step S1, the decision unit 30 checks on the basis of the monitored activities of the printing application 26 whether there is a sufficiently high probability that the print job 28 will be ready for printing at the first time t1. As long as this is not the case (no), the step S1 is repeated. When a positive result (yes) is obtained, the decision unit 30 searches the network 14 for available printers in step S2. For each of the printers 10 in the printing system, this search includes a check whether the printer is ready as well as a check whether the capabilities of the printer match with the job specifications of the print job 28 that is presently being prepared. This check may comprise among others a check whether the media type and size of the print job 28 are compatible with the capability of the printer, whether media of the required type and size are loaded on the printer (this information may be provided by a more elaborated status detector 22), whether the required color/B&W mode of the print job 28 is compatible with the printer, and whether the job intent (TDS, GA) of the print job is compatible with the printer. Even when all these conditions are fulfilled, the decision unit 30 may still decide that a printer is not available, because, for example, the user and/or the host computer is not authorized to use that particular printer.

In step S3 it is checked whether at least one printer 10 in the printing system is ready for executing the print job. As long as this is not the case (no), the steps S2 and S3 are repeated cyclically.

If at least one printer has been found to be ready (yes), the second time t2, i.e. the scheduled time at which the printer will go into the power-save mode, is read for each printer.

If two or more ready printers have been found in step S3, the printer with the largest second time t2 is selected in step S5. Then, it is checked in step S6 whether the second time t2 for the selected printer is smaller than the first time t1. If this is the case (yes), this means that even the printer that is the last to go into the power-save mode, would have entered the power-save mode at the first time t1 while a reasonable user would keep the printer in the ready mode. Hence, at the moment when there is a high probability for the print job 28 to be ready for printing, no printer would be available for immediately printing the job.

In an optional step S7 the user is alerted of this situation and the user is asked whether he wants to "reserve" the selected printer by preventing this printer from going into the power-save mode as scheduled. If the user confirms in step S8 that he wants to reserve the printer (yes), the decision unit 30 sends a request to the power-save mode setting unit of the selected printer 10 to increase the second time t2 such that the printer will not go into the power-save mode before the first time t1 when the print job 28 is ready (step S9). In practice, the second time, i.e. the scheduled time for the power-save mode, will be increased not just to the first time t1 but to the first time t1 plus a certain safety margin tx. This will assure that the selected printer is still ready at the time when the print job 28 is submitted. Then the decision process ends with step S10, and a new decision cycle may be started with step S1.

If the result in step S6 is negative (no), then the steps S7-S9 are skipped, because the selected printer will still be in the ready mode, anyway, at the first time t1.

Similarly, the step S9 will be skipped when the user decides in step S8 that he does not want to reserve the printer. This feature permits to select a relatively large value for the first time t1 because, if the user knows that it will take a considerably large time until the print job is submitted, he will reject the reservation in step S8 and, as a result, the power-consuming ready mode of the printer will not be extended for an unduly long time.

The step S5 is also optional but offers the advantage that the overall time in which all available printers are kept in the ready state is minimized, because the difference between the second time t2 as originally scheduled and the extended second time t2 set in step S9 is smallest for the selected printer.

In a modified embodiment, the compatibility check in step S2 and the assessment of the probability in step S1 may be integrated into a single step to be performed for each available printer. Then, the fulfillment or non-fulfillment (or partial fulfillment of each criterion may increase or decrease the probability value, and it will be decided that there is a sufficiently high probability that the print job being prepared will be submitted to the printer in consideration at or before the first time t1 when the probability value exceeds a certain threshold. In this case, the probability may be assessed differently for different printers. This modification may also account for cases where the user has other print options, i.e. the user has the option to submit the print job to another printer that is not part of the printing system considered here.

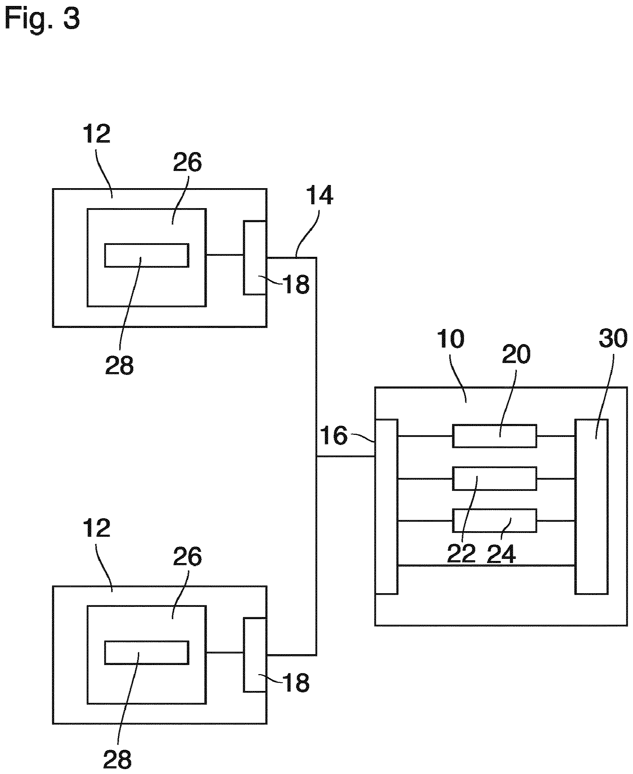

Another embodiment of a printing system according to the invention is illustrated in Fig. 3. Here, the printing system comprises only one printer 10. The decision unit 30 is not implemented in the data processing systems 12 but in the controller of the printer 10. Thus, the decision unit can communicate directly with the capabilities 20, the status detector 22 and the power-save setting unit 24 of its own printer, and it can also communicate with the printing applications 26 via the network 14 implemented on the data processing systems 12 that are not comprised in the printing system.

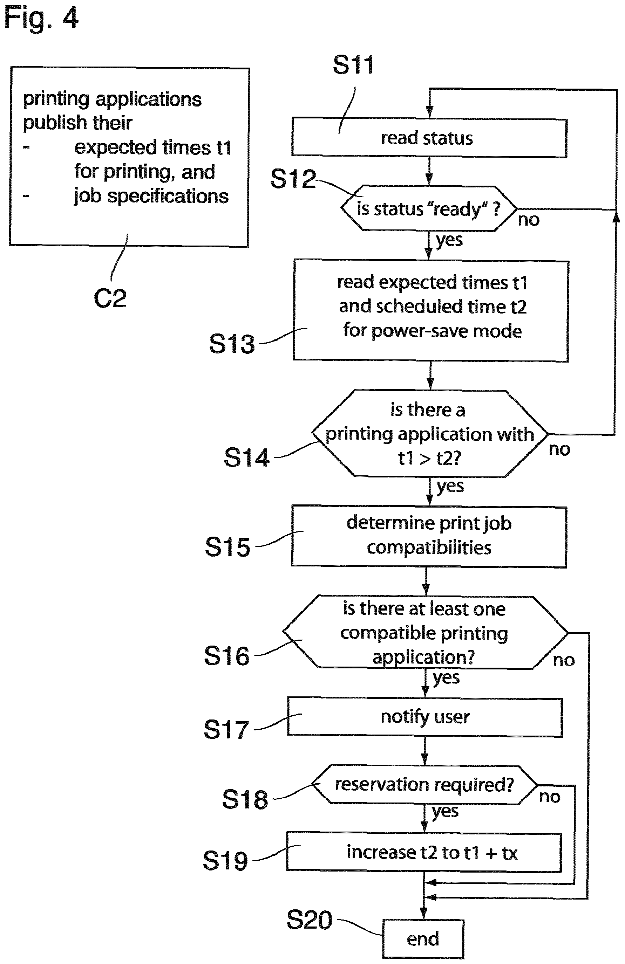

A suitable decision process for the decision unit 30 in Fig. 3 has been illustrated in Fig. 4. As a starting condition C2, it has been assumed that the printing applications 26 have published their expected times, when their print job will be ready for printing, as well as the relevant job specifications on the network 14. The expected times forecast that the printing applications 26 will require a printer at the expected times and thus indicate a probability that the printing applications 26 will require a printer at such expected times which thus can be seen as first times t1 in the rest of the process.

The decision unit 30 reads the current status of its own printer 10 in step S11 and checks in step S12 whether the status is "ready". As long as this is not the case (no), the steps S11 and S12 are repeated in a loop. When the status of the printer is "ready" (yes), the first times t1 published by the various data processing systems 12 as well as the second time t2 as provided by the power-save setting unit 24 are read in step S13. Then it is checked in step S14 whether there is at least one printing application 26 which fulfills the condition t1 > t2. If that is not the case (no) the decision routine loops back to step S11. Otherwise (yes), the print job compatibilities are determined in step S15 and it is checked in step S16 whether there is at least one printing application with a compatible print job 28 among the printing applications that have passed the test in step S14. If the result is positive (yes) the process continues with the steps S17-S20 which are equivalent to the steps S7 to S10 in Fig. 2. If the result in step S16 is negative (no), then the steps S17 to S19 are skipped.

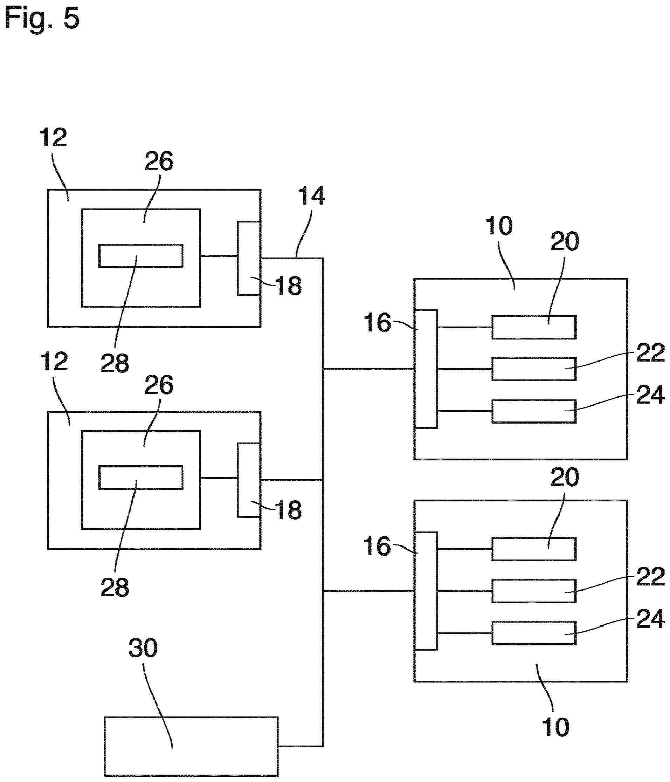

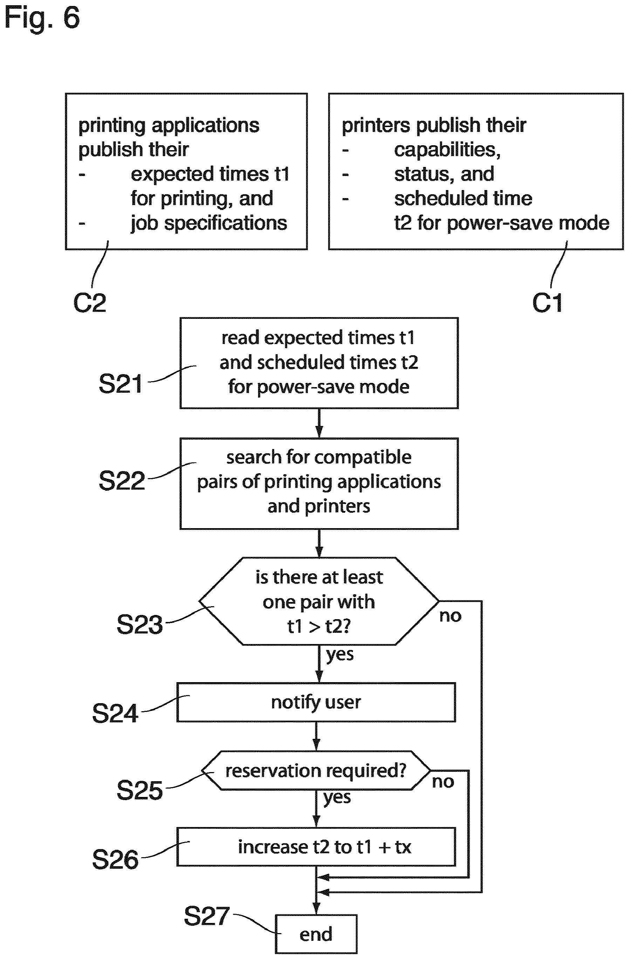

Fig. 5 shows yet another embodiment example of a network 14 connecting connecting a plurality of data processing systems 12 and a printing system comprising a plurality of printers 10 . In this embodiment, the decision unit 30 is provided separately from the plurality of printers 10 and the data processing systems 12 and communicates with the other network components over the network 14. A suitable decision process for the decision unit 30 in Fig. 5 has been illustrated in Fig. 6, assuming that the start conditions C1 and C2 have been fulfilled.

In step S21, the decision unit 30 reads the expected times from the printing applications 26 and the second times t2 from the power-save mode setting units 24 of the printers 10. Also in this embodiment the expected times are takes as first times t1. Step S22 is a search for compatible pairs of printing applications and printers.

If it turns out in step S23 that there is at least one pair of printing application and printer which fulfill the condition t1 > t2 (yes), then the process continues with the steps S24 to S27 which are equivalent to the steps S7 to S10 in Fig. 2. In case of a negative result (no) in step S23 the steps S24 to S26 are skipped.

## Claims

1. A printing system comprising at least one printer (10) having a power-save mode setting unit (24), **characterized by** a decision unit (30) configured to:
- check a first condition relating to information that is available in at least one printing application (26) implemented on a data processing system (12) that is connected to said at least one printer (10), said first condition indicating a probability that a printing application (26) comprised in the at least one printing application (26) will require, within a first time (t1) from the present, a printer comprised in the at least one printers (10) in a ready state for executing a print job (28),
- check a second condition relating to information that is available in said at least one printer (10), said second condition indicating that a printer comprised in the at least one printers (10) is in the ready state but will enter into a power-save mode within a second time (t2) from the present, and
- if both conditions are fulfilled, prevent the printer from going into the power-save mode before the lapse of the first time (t1).

2. The printing system according to claim 1, wherein the decision unit (30) is configured to perform a compatibility check between job specifications of the print job (28) and capabilities (20) of a printer (10) which is a candidate for the printer identified in the check of the second condition.

3. The printing system according to claim 1 or 2, wherein the power-save mode setting unit (24) is adapted to increase, upon request from the decision unit (30), the value of the second time (t2) to a value larger than the first time (t1).

4. The printing system according to any of the preceding claims, wherein the at least one printer comprises a plurality of printers (10) and wherein the decision unit (30) is configured to select one of the printers (10) on the basis of a comparison of the second times (t2) provided by the power-save mode setting units (24) of these printers.

5. The printing system according to any of the preceding claims, which comprises said at least one printing application (26) and wherein the decision unit (30) is integrated in the at least one printing application (26).

6. The printing system according to any of the claims 1 to 4, wherein the decision unit (30) is integrated in a controller of said at least one printer (10).

7. The printing system according to any of the claims 1 to 4, wherein the decision unit (30) is connected to a network (14) which interconnects said at least one printer (10) and said at least one printing application (26).
